# EUROPEAN PATENT SPECIFICATION

(11) **EP 1 762 588 B1**
(45) Date of publication and mention of the grant of the patent: **24.11.2010**
(21) Application number: 05388111.6
(22) Date of filing: 19.12.2005
(51) Int. Cl.: C08J 7/04, B32B 7/04, B32B 27/32

(54) **Coating with fire retardant properties for surfaces and method for the preparation thereof**
Beschichtung mit feuerhemmenden Eigenschaften und Verfahren zu ihrer Herstellung
Revetement ignifuge pour des surfaces et méthode pour sa production

(30) Priority: 09.09.2005 US 222637
(43) Date of publication of application: 14.03.2007
(73) Proprietor: Logstor A/S, 9670 Løgstør (DK)
(72) Inventor: Kirkegaard, Kim S., 9000 Aalborg (DK); Hansen, Lars Bo, 9670 Logstor (DK)
(74) Representative: Sundien, Thomas

(56) References cited:
- WO-A-91/11498
- US-A1- 2002 122 945
- US-A1- 2005 177 950

## Description

### FIELD OF THE INVENTION

The present invention generally relates to methods of preparing a graft coated member with fire retardant properties and the corresponding fire retardant products. More particularly, the present invention relates, to a graft coated pre-insulated pipe with flame retardant properties and methods of manufacturing the aforementioned product.

### BACKGROUND OF THE INVENTION

Polyethylene ("PE") has many desirable mechanical properties and it is readily synthesized and manufactured in any desired shape and size. In particular, there are many uses for PE, in its several grades, and particularly for high density polyethylene ("HDPE") in the form of tubing, pipes, conduits, and the like. For ease of reference, the use of the term, "pipe" or "piping" in the singular or plural herein, should be understood to also encompass any other configuration of tubing or conduit, and the joiner and/or connector components, such as straight joints, elbow joints, end-caps and the like, unless otherwise specified.

It is also known to the art that many potential uses for pipe comprising PE, in whole or in part, have previously been impractical due to the inherent limitations of this polymer material. This is of particular concern in the manufacture of extruded, pre-insulated pipes for general industry, the building trades, ocean platforms, e.g., offshore oil and gas platforms, and ship building. In all of those environments, there is a demand for pre or traditional insulated pipes. Generally, pipes that are pre-insulated during the manufacturing process are more economical to produce and install. One preferred type of pre-insulated pipe has an inner carrier pipe, manufactured from any art-known material such as, for example, mild steel, stainless steel, PE formulated with any art-known copolymer ("PEX") and/or HDPE, and the like. This inner car rier pipe is encapsulated with a foam insulating layer, e.g., a hard polyurethane foam that is, in turn, cased by a protective outer casing, preferably of HDPE, although steel is used for some applications. Optionally, one or more additional layers of foam, or other insulating materials, e.g., mineral wool or fiberglass or similar material, can also be incorporated into the structure of such insulated pipe. This type of pipe, with an HDPE outer casing, is typically manufactured as a single unit by either a traditional extrusion process or as a continuous process where insulation material and casing material are applied in one process (or operation).

HDPE pipes, including insulated pipes with an HDPE outer casing, are economical to manufacture and install, light, strong, and corrosion resistant. Of particular importance for the ship-building industry, pre-insulated pipes encased with HDPE pipe are more resistant to penetration of moisture into the insulating layer than are conventional insulated pipes. However, there are obstacles to wider use of this type of pre-insulated pipe manufactured solely from polymer materials. The most important obstacle is that pre-insulated pipes manufactured with conventional PE-based polymers, including HDPE, are generally unsuitable for use in areas where flame retardancy is required. For example, the melting point for HDPE is about 120° C. When exposed to sufficient heat for even a brief period of time, HDPE readily melts and forms burning drops which can spread fire and/or cause severe burns on contact with human skin and clothing. Once ignited, HDPE burns intensely, producing unharmfull gas and smoke. Various attempts have been made to impart flame retardancy to PE including painting, enclosing the pipe with a metal jacket, and blending the PE with other materials. None of these teachings have been entirely satisfactory. The same problems as to insulated pipes mentioned above go naturally for other structural parts or components made of various PE materials and/or blends.

Because of the poor flame retardant characteristics of PE, it has now been suggested to chemically graft a coating with flame retardant properties onto the outer surface of the outer casing.

U.S. Pat. No. 6,783,865, owned by the assignee hereof, discloses methods and compositions for grafting selected coatings onto PE, including HDPE and other PE-based polymers, to provide improved surface properties, including flame retardancy, ease of painting, scratch and abrasion resistance with a surface energy of more than 80 dynes/cm^{2,} and other improvements.

Although the teachings of the '865 patent provide a method of grafting fire retardant materials to the outer surface of the outer casing of pre-insulated pipes, the graft coating alone has not proven to be a satisfactory solution for pre-insulated pipes.

Even providing a graft coating of the type described in the '865 patent has not been entirely satisfactory due to a special problem that exists with respect to providing fire retardant properties to pre-insulated PE pipes. When pre-insulated pipes are exposed to flames and/or heat, the gas in the insulation material, such as polyurethane foam, begins to expand. Cell gasses in a 90% closed cell foam structure behind the HDPE outer casing start to expand as heat from a fire source begins to penetrate the outer casing. The expanding or ballooning of the cell gasses cannot be retained by the HDPE outer casing which has been weakened by the heat. The ballooning effect of the casing material increases as the temperature from the heat source rises. As the cell gasses balloon, the surface of the HDPE expands forcing the graft coating to thin as it expands along with the HDPE. The teachings of the '865 patent do not provide a graft coating with sufficient mechanical properties, such as strength or elasticity, to prevent the exposure of ungrafted HDPE to the fire due to expansion of the HDPE outer casing.

Known methods of preventing the damage to pipes from ballooning include incorporating threads in the pipes or outer casing pipes in order to resist the pressure from within the pipe. This method is expensive and must often be tailored to the specific casing diameter that fits the carrier pipe.

Thus, there remains a need for a fire retardant coating for a pre-insulated pipe with an HDPE outer casing capable of maintaining a low surface temperature, and possessing sufficient elasticity and strength for providing protection against the ballooning effect of the cell gasses of the insulating foam.

Also in the more general case of PE pipes not being insulated the graft coating according to the '865 patent has proven an insufficient fire retardant to an outer casing as the graft coating when exposed to high temperatures will fracture and cracks initiate leaving the underlying PE surface exposed to the heat. This cracking is further augmented in the case of a fluid or gas flow within the pipe yielding an internal pressure on the pipe walls. The splintering or cracks in the graft coating will thus appear even without the expansion or ballooning of any underlying foam insulation. The same problems as outlines in the foregoing for pipes thus naturally are present also for PE component than pipes and any PE surfaces in general. Similar problems are experienced for other plastics such as Polypropylene (PP), poly vinyl chloride (PVC), acrylonitrile butadiene styrene (ABS), and other polymer tubing.

Generally, most materials can be surface treated in different ways in order to improve their flame retardancy, for instance by painting or cladding with a more fire retardant material. However, these steps are, as mentioned above for the case of PE pipes, often both ineffective and quite expensive. This therefore often leads to the situation that a material with low resistance to fire is regarded as not viable in many constructional relationships.

Thus, there remains a general need for an effective yet inexpensive alternative to the conventional fire retardant treatments of different materials capable of maintaining a low surface temperature, and possessing sufficient elasticity and strength for providing protection against cracking or fracture.

### SUMMARY OF THE INVENTION

Accordingly, the present invention provides for coated components with fire retardant properties and methods for their construction, wherein a coating including a primer or a graft solution and an expandable fire proof insulation material are applied to the outer surface of the component. The component can for example be a pre-insulated pipe including an inner carrier pipe, an outer casing polyethylene pipe surrounding the carrier pipe, and an insulating foam between the carrier pipe and the outer casing pipe.

Furthermore, the invention provides for a graft coated member with fire retar dant properties, wherein the graft coating is covalently bonded to the outer surface of the member, and the coating includes a graft solution and an expandable fire proof insulation material. In an embodiment, the graft solution can also include a fiber mesh.

Further, the invention relates to a semi-manufactured article of a coating layer comprising a fiber mesh and an expandable fire proof insulation material, which coating layer can be applied to the surface of a member providing it with fire retardant properties.

The graft coating provides the member with a number of improved properties, including the ability to resist melting and burning for a time period ranging from about 1 to about 18 minutes on PE components by maintaining a sufficiently low surface temperature on the member. The graft coating according to the invention also provides additional support to the outer casing of the member by expanding to some extent to prevent the graft coating from cracking and exposing the naked material surface to heat and flames. Additionally, the graft coating of the present invention may be integrated into the production process of e.g. pipes or beams or the like in a nondisruptive manner, thereby providing a fast and inexpensive way to provide standard components with effective flame retardant properties. Furthermore, the graft coating of the present invention enables manufacturers to provide their already produced standard components with flame retardant properties.

The invention further provides for a graft coated pre-insulated pipe with fire retardant properties that includes an outer casing formed of one or more types of PE. The graft solution includes a non-polyethylene polymer or copolymer, such as a vinyl polymer, a urethane, an epoxy, a polysilicone and/or combinations thereof. In a further embodiment, the grafting solution also includes one or more fire retarding agents. The expandable fire proof insulation material maintains a low surface temperature for the underlying HDPE outer casing which prevents or mitigates the ballooning of the outer casing caused by expanding gasses, caused by the heat. The expandable fire proof insulation material in the graft coating may also be enhanced with material that reinforces its elasticity, which prevents the graft coating from forming gaps when the PE outer casing expands, thereby preventing the exposure of the outer casing to flames.

In one embodiment, the pre-insulated pipe includes an outer casing formed of a PE having a density, for example, ranging from about 0.930 g/cm³ to about 0.940 g/cm³, or greater. The included polyethylene broadly has an average molecular weight ranging, e.g. from about 100,000 amu to at least 6 x 10⁶ amu.

Thus, the pre-insulated pipe is preferably manufactured prior to the application of the graft coating to the pre-insulated pipe. The pre-insulated pipe according to the invention includes, for example, straight pipe, bent pipe, a straight pipe joint, an elbow joint, an end-cap, a heat-shrinkable joint, and combinations thereof. The graft coated pipe according to the invention also includes, for example, pipe with a single insulating layer between two concentric walls, and pipe with a plurality of insulating layers, to name but a few types of pipe that will benefit from the graft coating compositions and methods of the invention.

The graft coating provides the pre-insulated pipe with a number of improved properties, including maintaining a sufficiently low surface temperature on the pre-insulated pipe to prevent the non fire retarded foam insulation of the pre-insulated pipe from expanding and exposing the pipe to flames. The graft coating according to the invention also provides additional support to the outer casing of the pre-insulated pipe in resisting the expansion of the non fire retarded foam insulation, but which will expand to some extent to prevent the graft coating from cracking due to the above-mentioned ballooning effect.

The test used to confirm the improved properties is configured so that the pre-insulated pipe is exposed to a planar heated surface that is heated, e.g., by burning fuel (e.g., natural gas or propane), or electrical resistance, to a temperature ranging from about 800 to about 960 °C. The heating panel is a rectangle that according to different test methods measures about 25 x 51 cm and larger, and the graft coated pre-insulated pipe that is tested is positioned in accordance with different test methods such as ASTM E 84, IMO 653, or IMO 753.

Further, the graft coating provides the pre-insulated pipe with an improved surface energy allowing for post manufacture painting, coating, marking and adhesive application to the grafted surface. The graft coated pre-insulated pipe according to the invention has a surface energy ranging from about 56 to about 80 dynes/cm² or higher.

Processes for applying the graft coating to components, especially polyethylene substrates, are also provided by the invention.

A method according to the invention relates to preparing a coated member with fire retardant properties by comprising the steps of
- applying a coating comprising a primer or a graft solution to a surface of the member;
- applying expandable fire proof insulation material to the surface of the member while the coating is still wet; and
- curing the coated member.

In a further embodiment of the method the step of applying expandable fire proof insulation material is achieved contemporaneously with the step of applying the coating by adding expandable fire proof insulation material to the coating and applying the coating.

In yet a further embodiment of the method the expandable fire proof insulation material is expandable graphite.

One further embodiment of the method comprises adhering a fiber mesh to a surface of the member after the step of applying a coating, and before the step of curing the coated member.

The method according to a further embodiment of the invention further relates to members of PP, PVC, or ABS and coatings comprising primers tailored for these materials.

One further process according to the invention is a method of preparing a graft coated pre-insulated pipe with fire retardant properties by covalently grafting a heat resistant coating onto the pre-insulated pipe by:
(a) applying a graft solution to the exterior surface of the outer casing of the pre-insulated pipe, wherein the graft solution includes a monomer or prepolymer, a metal ion graft initiator, a peroxide catalyst, and a polymerization promoter reactive with the monomer or prepolymer;
(b) applying an expandable fire proof insulation material, e.g. expandable graphite, to the exterior of the outer casing pipe while the previously applied graft solution is still wet; and
(c) curing the applied composition.

In a further embodiment, the solution of step (a) also includes a flame retardant material, such as chlorinated phosphate esters, melamine derivatives, oligomeric phosphate esters, bromoaryl ether/phosphate product, phosphorus-based flame retardants, and phosphonates and a compatible solvent or solvents. In another embodiment, the flame retardant material may be applied to the pre-insulated pipe separately.

In a further embodiment, the solution of step (a) also includes adding expandable fire proof insulation material, such as expandable graphite. In another embodiment, the expandable fire proof insulation material may be applied to the pre-insulated pipe separately.

In a further embodiment, the method of preparing a graft coated pre-insulated pipe with fire retardant properties also includes applying a fiber mesh to the outer surface of the outer casing of the pre-insulated pipe after applying the graft solution and the expandable fire proof insulation material. Graft solution and the expandable fire proof insulation material may also be applied to the fiber mesh before or after the fiber mesh is applied to the pre-insulated pipe. This application of graft solution and expandable fire proof insulation material to the fiber mesh may be in lieu of or in addition to applying the graft solution and the expandable fire proof insulation material to the pre-insulated pipe.

Optionally, the graft solution of step (a) may also include a pre-formed polymer, suitable to be grafted to the activated pre-insulated pipe surface, alone and/or in combination with one or more of the monomer/prepolymers. The polymer is, e.g., a vinyl polymer, a urethane, an epoxy, a polysilicone, and/or combinations thereof, suitable to be grafted to the PE surface. In a further optional embodiment, the graft solution also includes a colorant such as a dye or pigment, and/or a fire retardant agent.

In another embodiment of the invention, the graft solution is first prepared without the polymerization promoter, and the process further comprises the step of mixing the polymerization promoter with the graft solution prior to application of the graft solution to the pre-insulated pipe, which allows for a longer storage period for the prepared graft solution.

The monomer or prepolymer is a vinyl monomer, a urethane monomer, an epoxy monomer and/or a silicon-based monomer or prepolymer. The graft initiator is an effective amount of a metal ion, e.g., present in a concentration ranging from about 0.01 to about 1.0%, by weight. For example the metal ion is an ion of iron, silver, cobalt, copper, cerium and/or combinations thereof. The catalyst is a peroxide present in the liquid composition in a concentration ranging from about 0.1 to about 5% by weight and includes, e.g., benzoyl peroxide, methyl ethyl ketone peroxide, 1-butyl hydroperoxide and/or combinations thereof. In one embodiment the polymerization promoter is present in a concentration effective to react with, and crosslink, the monomer or prepolymer. The polymerization promoter is a polyfunctional aziridine liquid cross linker.

In yet a further embodiment, the outer casing to which the graft coating is applied is a polyethylene having a density ranging, for example, from about 0.930 g/cm³ to about 0.940 g/cm³, or greater.

Optionally, the applied composition is self-curing, and/or cured by heating, and/or by exposure to ambient atmospheric moisture, e.g., when the monomer or prepolymer is a moisture curing (e.g., a moisture curing urethane). Depending upon the required conditions, the applied graft coating is cured at room temperature, e.g., for a period of time as long as 6 days, or by the application of heat, e.g., ranging up to about 93 °C. for a time period of as little as 30 minutes.

In any of the previously mentioned embodiments, the graft solution is applied to the pre-insulated pipe by a method selected from the group consisting of brushing, dipping, spraying and/or combinations thereof.

The invention further relates to a method of preparing a coating layer for application on a member which is already at least partly surface treated with a coating of a graft solution or a primer and for obtaining fire retardant properties; wherein the method comprises the steps of:
- applying expandable fire proof insulation material to a fiber mesh; and
- curing the coating layer.

In a further composition, the invention provides for a coated member with fire retardant properties, prepared by the above described methods, and for a coating layer for application on a member for obtaining fire retardant properties where the coating layer is prepared by the above described methods.

In yet a still further composition, the invention provides for a graft coated pre-insulated pipe with fire retardant properties, prepared by the process the above described methods.

### BRIEF DESCRIPTION OF THE DRAWINGS

A more complete appreciation of the present invention and many of the attendant advantages thereof will be readily understood by reference to the following detailed description when taken in conjunction with the accompanying drawings, in which:
Fig. 1A is a schematic cross-section of a conventional pre-insulated pipe to which the present invention can be applied;
Fig. 1B is a schematic cross-section of a pre-insulated pipe having a graft coating in which ballooning has resulted in a breach of the graft coating;
Fig. 2 is a schematic cross-section of one embodiment of a pre-insulated pipe with a graft coating, according to the present invention;
Fig. 3 is a schematic cross-section of another embodiment of a pre-insulated pipe with a graft coating that includes a fiber mesh, according to the present invention;
Fig. 4A is a schematic cross-section showing the application of a graft coating to a fiber mesh, according to the present invention;
Fig. 4B is a schematic cross-section of one embodiment of the graft coating including a fiber mesh, according to the present invention;
Fig. 5 is a schematic cross-section of a pre-insulated pipe with a graft coating that includes a fine fiber mesh;
Fig. 6 shows the application of a primer and a coating layer of a fiber mesh according to the present invention; and
Fig. 7 illustrates the application of primers and a coating layer according to the present invention to different materials.

### DETAILED DESCRIPTION OF THE INVENTION

The invention provides a coated member with fire retardant properties and methods for chemically bonding or grafting a coating containing expandable fire proof insulation material to a surface of a member.

After shortly describing the prior art in relation to a conventional pre-insulated pipe, the invention is then firstly described in relation to the graft coating of a pre-insulated pipe with an outer casing of a PE, where the invention provides a graft coated pre-insulated pipe with fire retardant properties and methods for chemically bonding or grafting a coating of polymer or polymers containing expandable fire proof insulation material to the outer surface of a pre-insulated pipe. Thereafter the invention is described in more general terms to other surfaces and materials.

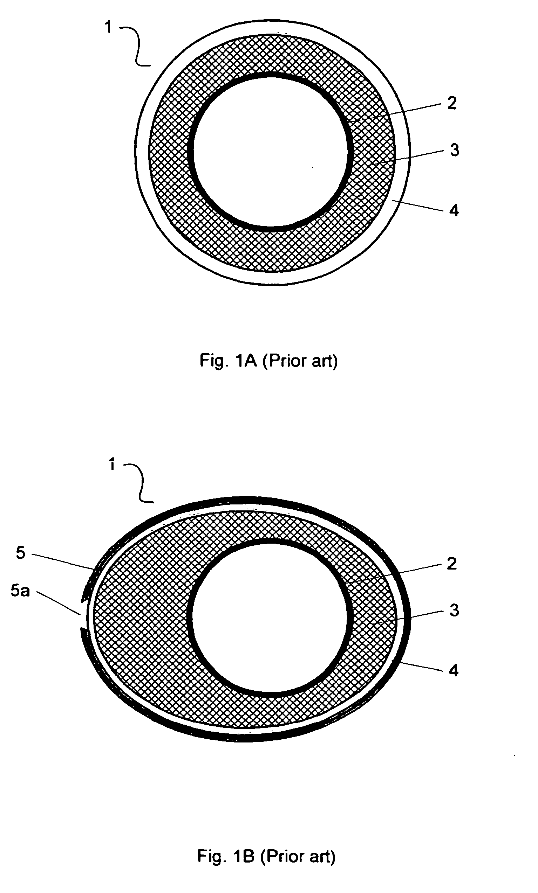

Referring now to the drawings wherein like reference characters designate identical or corresponding parts throughout the several views and more particularly to Fig. 1A, an example of a pre-insulated pipe is generally designated 1. The pre-insulated pipe 1 according to prior art is a standard pre-insulated pipe that is readily constructed to include an inner carrier pipe 2, an insulating foam layer 3, e.g. formed of a hard polyurethane, and an outer casing or jacket 4 of e.g. PE, such as HDPE, PP, PVC, ABS, or other polymers.

Pre-insulated pipes 1 include pipes manufactured with one or more insulating layers 3. Preferably, there are one or two insulating layers, although the artisan will readily appreciate that additional insulating layers are readily added when desired. Such a pipe can optionally include additional art-known technical features, such as a tracer pipe embedded within the polyurethane foam insulation.

Painting or grafting a fire retardant on a pre-insulated pipe through methods known in the art has not provided pre-insulated pipes with sufficient flame retardancy. Referring to Fig. 1B, when a pre-insulated pipe 1 is exposed to flames the gasses in the closed cells of the insulating foam 3 begin to expand. The expansion of the gasses, also known as ballooning, can cause the outer casing 4 to expand and warp. The expansion of the outer casing 4 is exacerbated by the weakening of the material at higher temperatures. For example PE begins to soften at around 85° to 95° C. As the outer casing expands, a coating of flame retardants 5 grafted or painted or in other ways applied onto the outer casing 4 begins to thin as it expands with the outer casing reducing its flame retardant properties. Eventually the coating is stretched so thin that breaches or gaps form at a point 5a in the flame retardant coating 5. The gaps 5a in the coating 5 allow the outer casing 4 to be exposed to the flames, leading to burning drops and ultimately to the destruction of the pre-insulated pipe 1.

The invention relates to the addition of an expandable fire proof insulation material to the coating as illustrated in the following figures. Hereby the coated pre-insulated pipe with fire retardant properties mixed with expandable fire proof insulation material of the present invention resists the damage from the ballooning effect by maintaining a low surface temperature on the pre-insulated pipe and, optionally, strengthening and supporting the outer casing of the pre-insulated pipe. The low surface temperature prevents or mitigates the ballooning of the outer casing 4. In a further embodiment, additional materials are added to the graft coating that improve the elasticity and capability to deform of the graft coating thereby prolonging the flame retardant and anti-ballooning effects of the graft coating.

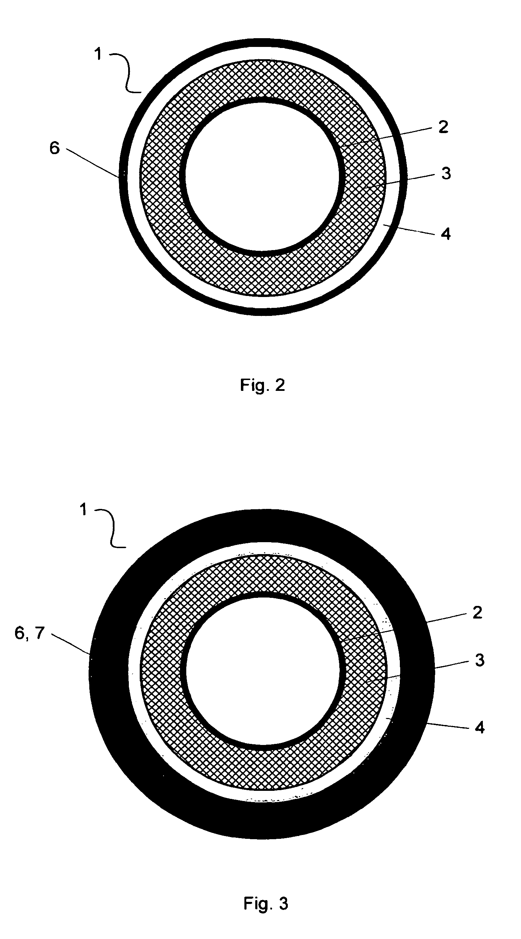

Referring now to Fig. 2, a graft coating 6 comprising a graft solution and an expandable fire proof insulation material is applied to the outer casing 4 of the pre-insulated pipe 1.

The inner carrier pipe 2 is constructed of a material suitable for the intended purpose, and can comprise steel, copper, brass, or other art-known alloy, any of the various PE compositions mentioned supra, any commercially available epoxy fiberglass and/or polyvinyl polymer pipe, to name but a few possibilities. Where desired, the inner surface can optionally be coated with a graft coating according to the invention, to enhance the properties of the carrier pipe lining and to provide, for example, improved resistance to heat, solvent penetration, and microbial contamination, to name but a few ways that the inner surface of a carrier pipe can be enhanced.

In a further embodiment, a multi-layer pre-insulated pipe can include one or more additional insulating layers, comprising the polyurethane foam 3 found in the first layer, and/or optionally the second layer is manufactured from different insulation materials, including heat resistant fibrous materials such as, mineral wool and/or glass wool, or any other art-known insulating material.

Flame retardation in pre-insulated pipes or just pipes of the types described is important, for example, in industries that require transportation of volatile and/or flammable liquids such as fuels. Other pre-insulated pipes comprised of PE that benefit from improved surface properties and reduced flammability include those for transporting food oils, paints, solvents, cleaning agents, and the like.

The pre-insulated pipe 1 discussed in the present invention includes any pre-insulated pipe with an outer casing 4 that is comprised of any PE or PE-based polymer or copolymer. As already mentioned, the invention is also applicable to surfaces of other materials as will be discussed later after the detailed description relating to PE pre-insulated pipes.

### Outer Casing of Pre-insulated Pipes: Polyethylene's and Copolymers

The PE outer casing 4 preferably has a diameter of 66 mm to 1600 mm and a cross-section of 1.0 mm to 35.0 mm, but the dimensions are of no importance to the invention. Reference to "polyethylene" or "PE" herein should be understood to include all grades of polyethylene and/or mixtures of PE grades, unless otherwise specified. The PE can comprise more than 75% by weight of non-polyethylene materials. Alternatively, the PE is blended or mixed, or formed as a copolymer, in combination with other polymers, and/or derivatives of polyethylene.

As noted supra, the grafting processes of the invention can be applied to an outer casing 4 formed of all grades of polyethylene, including derivatives, and mixtures and PE-copolymers formed with other types of polymer. Preferably the polyethylene outer casing 4 to be graft coated is a high density polyethylene or HDPE (>0.940 g/cm³ >0.0338 Ib/in³, MW approx. 100,000);

Other embodiments of graft coated PE outer casing 4 are formed from high density, high molecular weight polyethylene or HDPE-HWM (MW ranges from about 200,000 to about 500,000);

Further embodiments of graft coated PE outer casing 4 are formed from HDPE-UHWM: High density, Ultra high molecular weight polyethylene (>0.940 g/cm³ >0.0338 lb/in³, MW>106 to 6 x 10⁶);

Further still, there are useful embodiments of the invention that are formed by graft coating an outer casing of PE-LD: Low density polyethylene (<0,930 g/cm³ <0.0334 lb/in³), as well as PE-LLD: Linear low density polyethylene (0.918 to 0.935 g/cm³ or 0.0334 to 0.0339 lb/in³); PE-MD: medium density polyethylene (0.930 to 0.940 g/cm³ or 0.0334 to 0.0338 lb/in³); and combinations and blends of the above described grades of PE.

In further still embodiments of the invention, mixtures and blends of the above described PE outer casing 4 with other polymers are also contemplated to be used as the outer casing 4 of a pre-insulated pipe and advantageously graft coated according to the invention. For example, a pre-insulated pipe's outer casing 4 may be manufactured from two different types of polymer. A first type of outer casing is a mix of HDPE and PE-MD, and a second type is a mix of ethylene/vinyl acetate ("EVA") and PE-LD. Both types of PE, as well as other types, including polyethylene modified with flexible butyl-based rubber or polymer, are readily graft coated.

Of course, the artisan will appreciate that any other art-known types and grades of polyethylene-based materials not mentioned above will also benefit from grafting by the methods and compositions of the invention.

### Graft Coated Pre-insulated Pipe of a PE outer casing and Method of Preparing

Without meaning to be bound by any theory or hypothesis as to any proposed mechanism underlying the grafting reaction on PE surfaces of the inventive process, the grafting reaction on PE surfaces is believed to take place by means of a chain polymerization. This type of polymerization reaction, also referred to in the art as a "backbiting" reaction, consists of initiation and propagation reactions. Essentially, a graft initiator is contacted with the surface to be treated, e.g., an outer casing of a pre-insulated pipe formed in whole, or in part, of PE. It is believed that the graft initiator removes a hydrogen from the PE surface, and thereby induces radical formation in the polyethylene substrate. The radicals thus formed attack nearby carbon bonds, breaking the polyethylene chain(s). Once the outer casing pipe's surface has been activated, selected polymers are linked to the outer casing pipe and/or selected monomers react to extend graft polymer chains onto the outer casing surface at the activated break points. Further details concerning the inventive graft coatings and methods of making these coatings, are discussed below.

Referring again to Fig. 2, the graft coated pre-insulated pipe of the present invention includes a pre-insulated pipe 1 with a graft coating 6 applied to the exterior of the outer casing 4. The graft coating 6 is composed of a graft solution and an expandable fire proof insulation material. The mechanism and the reactions of the graft solution, as well as its composition, are discussed below for PE.

### Grafting Mechanisms on a PE surface and Reactions

The graft reaction can be better understood by considering the following steps (1a) through (3), wherein PE or --[CH² -CH₂]ₙ --is used to form the outer casing ("S") of a pre-insulated pipe the graft initiator is Gl* and R' is the residue of the polyethylene chain. x is a unit of vinyl monomer. The selection of x governs the property or properties that are obtained. Optionally, a mixture of monomers is employed, and more than one property of the PE outer casing can be modified or enhanced in a single processing step.

In step (1) the Gl* induces radical formation ("S' ") in the polyethylene outer casing (1a).

Alternatively, the Gl* activates reactive prepolymers or polymers ("P") in the reaction medium, to P* (1b) that in turn directly grafts to the HDP (1c).

S-H+Gl* → S*+H⁺⁺Gl (1a)

Gl*+P → P*+Gl (1b)

S-H+P* → S-P (1c)

When the reaction proceeds according to step (1 a), initiation occurs as shown by step (2) below.

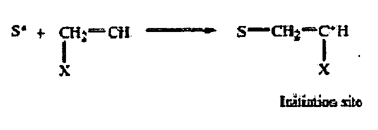

In step (3), chain propagation occurs, and continues.

### (3) Chain Propagation

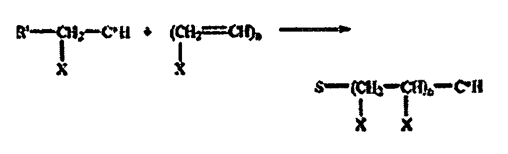

The graft initiator is optionally regenerated by reaction (4), as follows.

### (4)

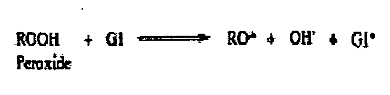

The process may be terminated by radical combination as shown in reactions (5) and (6) 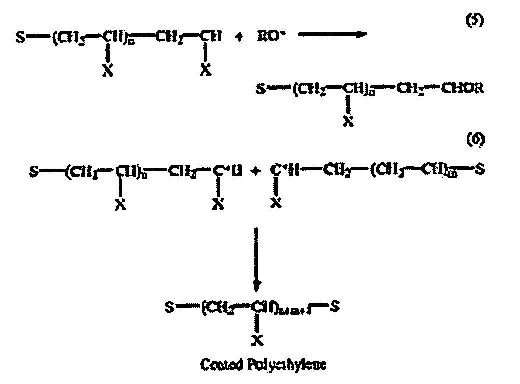 (Wherein, n and m are integers defining subunit number, and can be the same or different.

Thus, when the reaction proceeds from step (1a) through steps (2) and (3), the new polymer structure forms at the initiation site and the chain is lengthened from that point until the reaction is terminated. When the reaction proceeds from steps (1b) and (1c), a preformed reactive polymer is linked directly with the PE surface. Both alternative reactions provide a coated polyethylene material that possesses all the desirable properties of the selected grafted polymer coating.

### Methods and Solutions for Grafting on a PE surface

As exemplified below, the graft coating includes a grafting solution and an expandable fire proof insulation material. The grafting solution is applied to a pre-insulated pipe with an outer casing formed of PE, exemplified as HDPE, by any available art-known method, including, e.g., brushing, spraying, dipping, spin coating, vapor deposition, and the like. The viscosity of the grafting solution is adjusted as needed, so that, for example, it is sufficiently viscous for application by dipping or brushing, without significant dripping or running of the applied solution, or sufficiently thin when optionally sprayed onto the surface to be treated.

For convenience, the grafting solution is optionally prepared in two parts: Part A and Part B.

### Formulation of Part A

Part A of the grafting solution is prepared in a solvent compatible with the reagents selected for the grafting. Solvents are selected depending on the prepolymer and/or monomers employed, and can include polar solvents such as water, water soluble alcohols, ethers, esters, ketones, and derivatives and mixtures thereof, and nonpolar solvents such as organic solvents, e.g., aromatic solvents such as benzene and its derivatives, alkanes and/or alkenes and their derivatives, halogenated organic solvents, other readily available solvents.

Graft initiators are preferably metal ions including, for example, iron, silver, cobalt, copper, cerium and others. More preferably, as exemplified herein, silver ion is employed. The graft initiators are preferably employed at a concentration ranging from about 0.01 to about 1.0%, and more preferably from about 0.001 to about 0.1 % by weight, relative to the weight of prepolymer or monomer(s) present.

Catalysts are preferably peroxides, including, for example, hydrogen peroxide and any organic peroxide, such as, e.g., benzoyl peroxide, methyl ethyl ketone peroxide, 1-butyl hydroperoxide and derivatives and combinations thereof. The catalysts are preferably employed in a concentration ranging from about 0.1 to about 5%, or greater. More preferably, the catalysts are employed in a concentration ranging from about 0.05 to about 1.0% (by wt relative to the solution weight).

Monomers or prepolymers include, for example, organic-based monomers, silicon-based monomers, and/or combinations thereof. Organic-based monomers useful for grafting surfaces comprising PE preferably include urethane precursors. Urethane precursors include water-dispersed polyurethane monomers, e.g., NeoRez.TM. R-9679 (Avecia, Inc., Charlotte, N.C.). Other water-dispersed prepolymers include epoxy monomers, e.g., preferably including the epoxy monomer available as Epi-Rez.TM. (Casing Chemical Co., Parsippany, N.J.).

Aliphatic moisture-curable urethanes are also employed, e.g., the Spenlite.TM. M27-X-63 and/or the less viscous M22-X-40 (Reichhold Chemical, Inc., Research Triangle Park, N.C.), and D.R.R. G84 EK 40 epoxy resin (Dow Chemical) and/or combinations thereof.

Aromatic moisture curing urethanes include, for example, the Spenkel.TM. M21-X-40, M21-X-40LM, M23-X-56, M37-A6X-42, M67-160, M26-X-64 and M86-A6X-60 and/or combinations thereof (Reichhold Chemical, Inc., Research Triangle Park, N.C.).

Aromatic urethane prepolymers include, for example, the Spenkel.TM. P49-A60, P82-K4-75, and/or combinations thereof (Reichhold Chemical, Inc., Research Triangle Park, N.C.). Other art-known epoxy resins/prepolymers are also readily employed. These include, for example, epoxy prepolymer Araldite GZ 488-40, epoxy resin (Ciba Geigy Corp.).

Silicon-based monomers useful for grafting surfaces comprising PE preferably include silane prepolymers. Readily available silane monomers include organic silanes such as, vinyl alkyl-ethoxysilanes, e.g., vinyl triethoxy silane and vinyl trimethoxy silane monomers, e.g., SiV 9112.0 and SiV 9220.0, respectively, from Galest, Inc., Tullytown, Pa.), to name but a few. Combinations of any of the foregoing monomers/prepolymers may optionally be employed.

In one embodiment, vinyl and epoxy functional silanes, such as the vinyl triethoxy silane and vinyl trimethoxy silane monomers described supra, are added to the grafting solution in order to provide improved paintability and scratch resistance to the outer casing 4. Such an improved surface allows the pre-insulated pipe to be readily painted or marked in any color or treated with any other useful adhesives or coatings after manufacture. With these improved surface properties, the pre-insulated pipe can be easily color-coded after manufacture, and/or marked with letters, numbers and other indicia. In another embodiment, the grafted articles can be readily fixed or affixed to other articles by means of adhesive or glue-type systems. In an optional embodiment, grafting of the interior surface of, for example, a PE-based carrier pipe can allow post-manufacture application of art-known coatings that will reduce solvent penetration of the carrier pipe and/or retard microbial growth within a fluid-filled system of pipes, as needed.

In another embodiment, additional components are optionally combined with the liquid composition. Such additional components include, e.g., one or more dyes or pigments that impart a heat-reflective property to the grafted coating, as well as with any other art-known components commonly added to paints and coatings. Such reflective colorants include, simply by way of example, finely divided metal powders, in a proportion sufficient to give the finished grafted coating a metallic and reflective appearance. Such metal powders, include, without limitation, aluminum, copper, brass, stainless steel, gold, chromium and /or any other suitable powdered material that will impart a heat reflective luster. Optionally, other reflective colorants are employed, separately or in combination with metallic powders. Such additional reflective colorants include, for example, powdered titanium dioxide, zinc oxide, and/or combinations thereof, in proportions that impart a reflective white appearance to the finished coating.

In a further embodiment, suitable inorganic or organic dyes or pigments that impart a marking color that is not white or metallic are mixed into the grafting solution or covalently linked by art-known methods to one or more of the components of the liquid composition. These include colorants that impart red, green, orange, yellow, blue, violet and variations of these. Suitable colorants for this purpose include, simply by way of example, Tint Ayd EP or UL (Red), green yellow, and/or combinations thereof, that are commercially available, for example, from Daniel Products, Jersey City, N.J.). Additional such pigments or colorants include, e.g., zirconium oxide, zircon, zinc oxide, iron oxide, antimony oxide, and particularly weather resistant coated types of TiO₂. The pigments may also be blended with a suitable extender material which does not contribute significantly to hiding power. Suitable extenders include silica, baryte, calcium sulfate, magnesium silicate (talc), aluminum oxide, aluminum silicate, calcium silicate, calcium carbonate (mica), potassium aluminum silicate and other clays or clay-like materials. Where present, the pigments and extenders are normally present at a level of from about 0.1 to about 1.0 parts by weight per part by weight of the polymer components of the grafting composition, on a dry weight basis.

Further optional components of the liquid composition of the grafting solution and of the formed graft coating include, for example, anti-oxidants, UV absorbing compounds, and other stabilizers well known to the art in art-known proportions. The composition of this invention may also optionally include other ingredients in amounts which are commonly included in paint and lacquer formulations such, wetting agents, surfactants, bactericides, fungicides, mildew inhibitors, emulsifiers, suspending agents, flow control agents such as waxes or wax dispersions, level agents, thickening agents, pH control agents, slip agents such as silica or clay and the like.

In a still further embodiment, any of the above-described monomers, including, simply by way of example, dispersed polyurethane in combination with, e.g., epoxy prepolymers Epi-Rez.TM. (Casing Chemical Co., Parsippany, N.J.), and NeoRez R9679.TM. (Avecia, Inc., Charlotte, N.C.), are pre-linked with suitable colored dyes or pigments by art-known methods in order to provide a fully grafted and permanently colored surface to the treated PE substrates. Methods for linking dyes or pigments to these monomers are art-known. For example, the desired colorants and/or pigments are dissolved in monomers/prepolymer solution and then applied onto the desired substrate by any effective method (e.g., dipping or spraying), following by curing at, e.g., at about 65°c for about 20 to about 30 minutes.

Prepolymers and/or monomers are preferably employed in the grafting solution in a concentration ranging from about 0.1 to about 50%, by weight, relative to the solution. More preferably, the prepolymers and/or monomers are employed in a concentration ranging from about 0.1 to about 20%, by weight, relative to the solution.

Thus, the desired reagents, e.g., prepolymer(s) and/or monomers, catalyst, graft initiator system and other ingredients of the composition are mixed in a container with a compatible solvent or solvents to form Part A.

In yet a still further embodiment, one or more flame retardant agent or agents are added to the formulation, e.g., are added to Part A. Any art-known flame-retardant composition that is compatible and miscible with the components and solvents of the formulation is optionally employed. For example, art-known organic or inorganic phosphorous-based flame retardants are readily employed. It is understood that the flame retardant agents may be applied to the outer casing 4 separately without being a component of the graft solution, as discussed below.

In particular, the flame retardant is a phosphorous-based flame retardant such as, for example, chlorinated phosphate esters, melamine derivatives, oligomeric phosphate esters, bromoaryl ether/phosphate product, and phosphonates. Exemplary flame retardants include, dimethyl methylphosphonat, diethyl-N, N-bis (2-hydroxyethyl) aminomethyl phosphonate, oligomeric chloroalkyl phosphate/phosphonate, tri (1, 3-dichloroisopropyl) phosphate, oligomeric phosphonate, to name but a few.

These types of flame retarding agents, and others, are available, e.g., from Akzo Nobel Chemicals, Inc., Dobbs Ferry, N.Y., under the trade name of Fyrol .TM.. Additional flame retardants include, for example, isopropylated triaryl phosphates, aklyl aryl phosphates, t-buryl triaryl phosphates, triaryl phosphates and resorcinol diphenyl phosphate, which are available, e.g., from Akzo Nobel Chemicals, Inc., supra, under the trade names of Fyro-flex.TM. and Phosflex.TM.' The Akzo Phosflex.TM. products include, e.g., tributyl phosphate, isopropylated triphenyl phosphate ester, to name but a few.

As exemplified herein, dimethyl methylphosphonate, available as Fyrol.TM. DMMP from Akzo Nobel Chemicals, Inc., is mixed into the formulation, alone and/or in combination with any other suitable flame retardant material. The following table summarizes the flame retardant additives available from Akso Nobel Chemical, Inc., by both generic and trade names, and is provided for the convenience of the reader, and is not intended to limit the scope of the invention in any way.

| | **Inorganic Phosphates** |
|---|---|
| | |
| **Fyrex^{™}** | **diammonium and monoammonium phosphate salt** |
| **Flexible Fyrex^{™}** | **diammonium and monoammonium phosphate salt** |

| | **Monomeric and Oligomeric Phosphonates** |
|---|---|
| | |
| **Fyrol^{™} DMPP** | **dimethyl methylphosphonate** |
| **Fyrol^{™} 6** | **diethyl N,N bis [2-hydroxyethyl]** |
| | **aminomethyl phosphonate** |

| | **Melamine Derivatives** |
|---|---|
| | |
| **Fyrol^{™} MC** | **melamine eyanurate** |
| **Fyrol^{™} MP** | **melamine phosphate** |

| | **Bromoaryl Ether/Phosphate Product** |
|---|---|
| | |
| **Fyrol^{™} PBR** | **Pentabromodiphenyl oxide/phosphate ester** |

| **Akzo Tradename** | |
|---|---|
| | **Chlorinated Phosphate Esters** |
| | |
| **Fyrol^{™} FR2** | **tri (1, 3-dichloroisopropyl) phosphate** |
| **Fyrol^{™} CEF** | **tri (2-chloroethyl) phosphate** |
| **Fyrol^{™} PCF** | **tri (2-chloroisopropyl) phosphate** |
| **Fyrol^{™} 38** | **tri [1,3- dichloroisopropyl] phosphate** |

| | **Oligomeric Phosphate Esters** |
|---|---|
| | |
| **Fyrol^{™} 25** | **oligomeric chloroalkyl phosphate/phosphonate** |
| **Fyrol^{™} 51** | **oligomeric Phosphonates** |
| **Fyrol^{™} AH** | |
| **Fyrol^{™} 99** | **oligomeric chloroalkyl phosphate** |

Flame retardant(s) are added to Part A in a proportion that enhances the flame retardant properties of the graft coating without impairing other desirable properties as described and defined herein. Thus, based on the foregoing, the artisan will appreciate what amounts/proportions of flame retardant to add to Part A. Simply by way of example, the flame retardant component(s) is added to Part A in a proportion of about 0.1 wt percent to about 10 wt percent. More particularly, the flame retardant is added to Part A in a proportion ranging from about 0.5 wt percent to about 5 wt percent. Preferably, when the flame retardant is, e.g., Fyrol.TM. DMPP, it is added in a proportion ranging from about 0.5 wt percent to about 3 wt percent, or more.

The pH of the formulated liquid composition should preferably be in the range of from about 6-8, and appropriate amounts of a suitable acid, e.g., phosphoric or acetic acids or a base, e.g. sodium hydroxide, ammonia or ammonium hydroxide, may be included into the composition to adjust the pH as necessary.

### Formulation of Part B

Part B of the grafting solution is prepared as a separate solution to contain a polymerization promoter, such as a cross linking compound. This strategy avoids premature gelation or hardening of the composition over periods of storage. Suitable cross linking compounds include any art-known cross linkers that will react with, and enhance cross linking of the monomers or prepolymers employed for the grafting process. Such a polymerization promoter is particularly desired where the polymeric component contains functional groups which are capable of undergoing ionic condensation reactions, e.g., carboxy, hydroxy or epoxy.

Suitable polymerization promoters or cross linking agents include melamine based amino resins such as hexamethoxymethylmelamine, benzoguanamine resins, urea formaldehyde resins, glycoluryl-based resins and like materials. Preferred cross linking agents are those which are active at ambient temperatures, i.e., from about 20 to about 30° C. and include epoxy silanes such as gamma glycidoxypropyltrimethoxy silane, beta-(3,4-epoxycyclohexyl) ethyltrimethoxy silane and polyfunctional aziridines, In particular, the selected crosslinker is reactive with prepolymer or polymer carboxyl groups.

The crosslinker exemplified herein is a polyfunctional aziridine liquid crosslinker, such as, for example, 1-aziridinepropanoic acid, 2-methl-, 2 ethyl-2-(3-(2-methyl-1-azirindinyl)-1-oxypropoxy) methyl)-1,3-propandiyl ester marketed by Zeneca Resin, Wilmington, Mass., under the trade name Crosslinker CX-100.TM.. This is a trifunctional material with an equivalent weight of 156, that is used to crosslink monomers, prepolymers and/or polymers with reactive carboxyl functionality, in both water-based and organic solvent-based systems.

Optionally, other art-known components are provided in Part B, include, simply by way of example, hardeners stabilizers and the like. For those embodiments comprising epoxy monomers or precursors, hardener or curing agents include, e.g., hardeners or curing agents such as, for example, those comprising amidoamines, polyamides, cycloaliphatic amines and the like. Polyamine epoxy curing agents or hardeners, e.g., including those comprising trimethylhexamethylenediamine, are commercially available, for example, from Air Products and Chemicals, Inc. Allentown, Pa.)

### The Grafting Solution and Process on a PE surface

Parts A and B are mixed in a suitable proportion, stirred to a uniform solution, and the resulting grafting solution may be applied directly to the PE outer casing 4 to be treated. The time necessary for the reaction to run to completion depends up the reaction temperature, the reagents employed and the desired properties of the grafted PE. Generally, after all the components of the graft coating are added, the solution is air dried onto the PE outer casing 4, and then cured by the application of heat for a time period ranging, e.g., from about 1 to about 4 hours, at a temperature ranging, e.., from about 38 to about 66 °C. When heat curing is undesirable, the coated pre-insulated pipe can optionally be allowed to cure at ambient temperature, e.g., 25-30 °C., for up to 6 or more days.

The expandable fire proof insulation material can either be added as a component of Part A of the grafting solution or it may be applied to the outer casing pipe 4 after the grafting solution has been applied, but while the grafting solution is still wet. Once the flame raises the temperature to the expansion temperature of the expandable fire proof insulation material, the expandable fire proof insulation material is initiated and begins to expand. The expansion of the expandable fire proof insulation material maintains the low temperature on the surface of the PE outer casing thereby preventing ballooning. The thicker the coating of the expandable fire proof insulation material, the longer the graft coating can maintain a low surface temperature and protect the pipe.

The expandable fire proof insulation material is preferably expandable graphite with a particle size ranging from 0.01 mm to 2.0 mm. Preferably, the expandable graphite has a heat activation temperature between 120°C and 250°C. The expandable graphite has an expansion volume of between 50 ml/gram and 500 ml/gram, preferably 250 ml/gram. The expandable fire proof insulation material provides the graft coating with insulation capacity and elasticity. In some cases, the expandable fire proof insulation material also provides the flame retardancy.

Referring now to Figure 3, an embodiment is shown in which the graft coating 6 also includes a polymer or other fiber mesh 7. The fiber mesh has a melting point higher than that of the PE outer casing, preferably greater than 120°C, and a mesh size between 0.1 mm to 10 mm, preferably between 0.1 mm and 1.0 mm. The fiber mesh is formed from materials such as fiberglass, carbon, Kevlar, Polyimide, Polyester, or other materials capable of withstanding high temperatures and can be produced as e.g. a woven, a non-woven or a random mesh. The fiber mesh strengthens and supports the PE outer casing 4 to resist the ballooning effect of the gasses caused by the heat. Additionally, the fiber mesh may provide some fire retardancy to the pre-insulated pipe and elasticity to the graft coating.

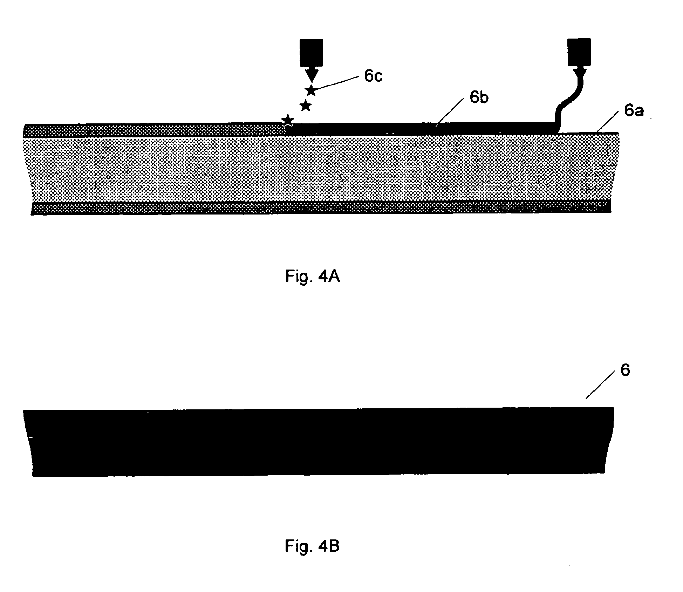

Referring to Fig. 4A, a method of applying the graft coating to the pre-insulated pipe is by first applying the grafting solution 6b and the expandable fire proof insulation material 6c to both sides of a fiber mesh 6a. The grafting solution 6b and the expandable fire proof insulation material 6c permeate the fiber mesh 6a to form a graft coating 6 (Fig. 4B). The graft coating is then applied to the outer casing 4 (Fig. 3) of the pre-insulated pipe. It is under stood that the grafting solution 6b and the expandable fire proof insulation material 6c may be applied to only one side of the fiber mesh 6a. In another embodiment, the grafting solution 6b is applied to both sides of the fiber mesh 6a, while the expandable fire proof insulation material 6c is only added to one side of the fiber mesh 6a, preferably the side of the fiber mesh that will come into contact with the outer casing 4. It is also understood that the grafting solution 6b and the expandable fire proof insulation material 6c may be applied directly onto the outer casing pipe 4 and the fiber mesh may then be applied to the outer casing pipe 4 while the grafting solution is still wet.

In a further embodiment of the invention, the expandable fire proof insulation material is applied to the fiber mesh making a semi-manufactured article which can be stored for later application. When convenient and needed the fiber mesh with the expandable fire proof insulation material can then be applied to an outer casing of a pipe which just prior has been coated and where the coating is still wet to act as an adhesive to the fiber mesh. Further, other primes can be used to bond a particular substrate to the semi-manufactured coating layer comprising the fiber mesh.

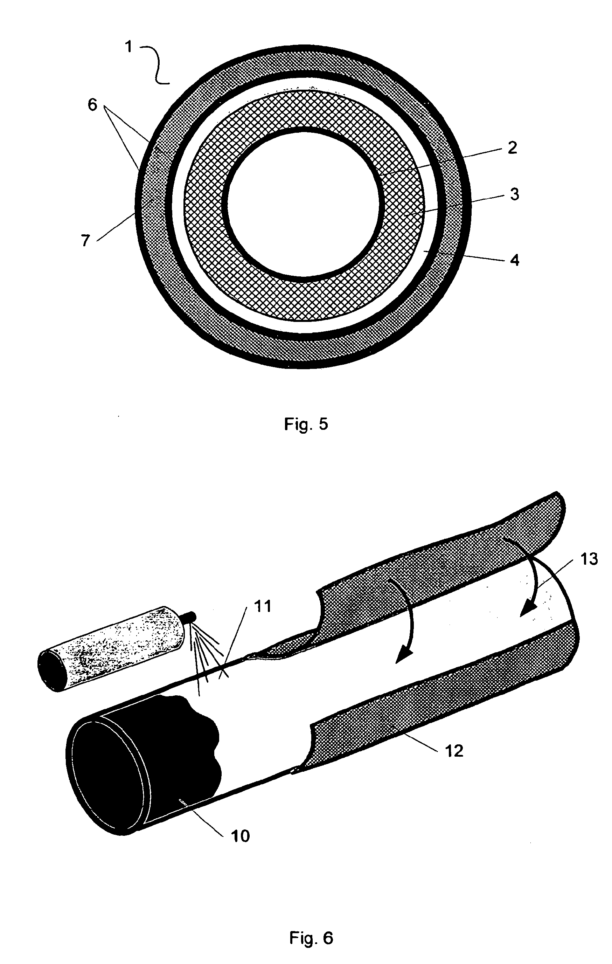

When using a fine mesh, the grafting solution and the expandable fire proof insulation material may not be able to permeate the mesh. Fig. 5 shows a graft coating 6 with a fine mesh 7 of the present invention. The grafting solution and the expandable fire proof insulation material are applied to both sides of the fine mesh in order to form the graft coating 6.

The graft coating of the present invention provides many advantageous properties to the pre-insulated pipe of the present invention. Among others, the graft coating maintains a low surface temperature for the pre-insulated pipe. The low surface temperature prevents or slows the ballooning of the pre-insulated pipe's insulation when the pre-insulated pipe is exposed to heat or flames. Additionally, the graft coating provides additional support to the outer casing of the pipe in order to prevent the outer casing from warping or cracking. The graft coating may also contain materials that provide elasticity or plasticity to prevent cracks and gaps from developing in the flame retardant graft coating upon expansion of the pre-insulated pipe due to expansion of the gasses in the cells of the foam insulation when subjected to heat. Both the expandable fire proof insulation material and the grafting solution are required to prevent damage to the pre-insulated pipe when it is exposed to heat or flames.

It should be noted that the graft coating with fire retardant properties according to the present invention is not restricted to pre-insulated pipes of PE as described in details above, but can equally well be applied to any element with an outer surface of PE. The same advantages mentioned for pre-insulated pipes above are also present when using the graft coating with expandable fire proof insulation material on other structural components, and the graft coating with or without a fiber mesh solves the same problems of providing a strong bond to the PE surface while on the same time acting to prevent or diminish the heat reaching the more heat sensible surface of the PE. Further the expandable fire proof insulation material in the graft coating ensures, as also mentioned above, that the coated surface remains unbroken and without fissures through which a fire can get to the PE-material.

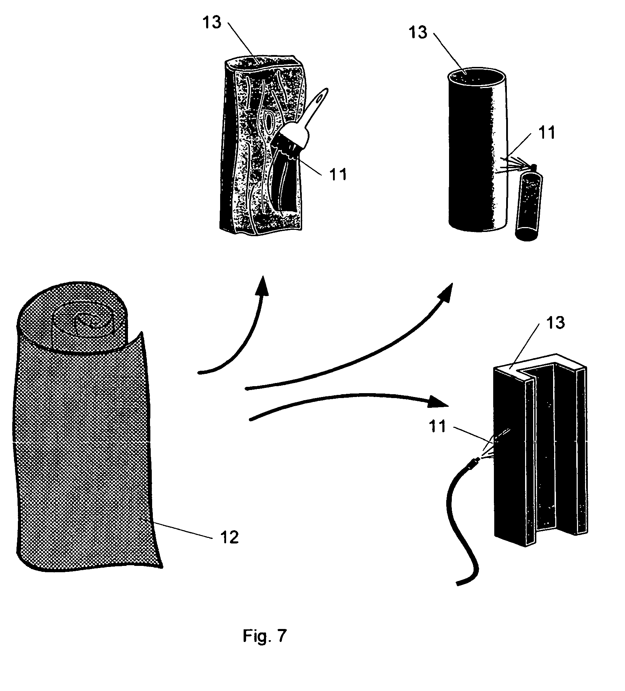

In a further embodiment of the invention an expandable fire proof insulation material is applied to other material surfaces than PE, still with the purpose of providing the particular member or element with flame retardant properties. This is illustrated in figure 6, where a structural element or part 10 is coated with fire retardant according to the invention. In this example the member 10 is in the shape of a pipe, but as already mentioned it could equally well attain other shapes such as a beam etc. First the outer surface of the member 10 is coated with a primer 11 tailored to the material of the exposed surface, which could include a graft coating according to US Pat. No. 6.783.865. Many different primers exist that are each specifically designed to a specific materials to provide adequate adhesion and bond between a surface of the specific material and subsequent topcoats. Primers in general further can be designed with additional properties for instance containing some pigment, work to lend uniformity to the topcoat, work to inhibit corrosion of the substrate, and/or stop the discoloration of the topcoat. As an example can be mentioned zinc phosphates for steel. The primer 11 can be applied to the member 10 in many ways e.g. by spraying, painting, brushing and dipping. In the embodiment of the invention illustrated in figure 7 the expandable fire proof insulation material has first been applied to a fiber mesh as described earlier to make a semi-manufactured coating layer 12. This coating layer 12 is the applied to the outer surface of the member 10 while the primer 11 is still wet for instance by wrapping as sketched in the figure by the arrows 13. The now fire retardant graft coated member is then left to cure and dry. A big advantage here is that the application of the fiber mesh leaves the element 10 in a state where it can be move and transported around while the coatings are curing underneath the pre dried semi-manufactured coating layer. The need for storerooms is thus minimized.

In a further embodiment of the invention the expandable fire proof insulation material is mixed with the primer or graft solution prior to application onto the material surface. A fiber mesh can then optionally be added thereafter. Further the expandable fire proof insulation material can be applied separately onto the primer or graft solution followed by a fiber mesh. If no fiber mesh is applied the material member has to be left to cure for a longer time period, how long exactly depending on the specific material and primer. Further the fiber mesh acts to increase the strength of the graft coating.

In figure 7 is illustrated the use of coating layer 12 of a fiber mesh and an expandable fire proof insulation material according to the invention. In this embodiment the coating layer is made as a semi-manufactured element 12 by having first applied the expandable fire proof insulation material to one or more sides of a fiber mesh as described previously. This is advantageous as the same coating layer can be used to coat a variety of components 13 having outer surfaces of different materials. Only each component 13 is first to be coated with a graft solution or a primer 11 corresponding to the material on the surface of the component. A wide series of primers designed for different materials such as wood, steel, PVC, ABS or PP are commonly availably on the market at relatively low costs. Thus by the proposed methods according to the invention the process of providing an element with fire retardant properties is largely simplified, and far more cost effective than by conventional methods known in the art.

### Confirming the Properties of the Grafted Surface

The graft coatings were also tested for their ability to resist melting and catching fire for a time period, by exposure to a standardized source of intense radiant heat, as described in greater detail in the Examples, infra. Surface energy was tested using standardized wet-ability inks, described as follows.

### Surface Energy Testing

A number of art-known methods are available for determining the improvement in adhesion of paints, cements, adhesives and the like to surfaces. The graft coated surfaces of PE samples were tested for their surface energy by a standardized commercial test of surface wet-ability using inks of known surface tension. The adhesion and/or paintability properties of the grafted surfaces depend upon the surface energy. A commercially available wet-ability ink is the Corona-plus Pro-Dyn Test Ink.TM. (Vetaphone Company, Denmark). The test inks are formulated in standard felt-tipped pens, with inks that are rated by their surface tension in dynes/cm² . If a surface is marked and the line of ink breaks up into small droplets (reticulates) within 3 seconds, then the surface has a surface energy lower than the surface tension rating of the ink. In essence, if the surface can be wet by the ink, the surface energy of the treated surface (e.g., the tested graft coating) is higher than the surface tension rating of the ink, in dynes/cm².

These test inks are marketed in 2-dyne/cm² increments, so that the surface energy of the grafted coatings is readily determined, and the graft coated sample articles produced by the following examples have been shown to have a surface energy of at least 56 dynes/cm² , which is within the limits of the testing reagents available at the time of testing. Higher surface energy results, e.g., up to 80 dynes/cm², and greater, are expected to be confirmed with the availability of wet-ability testing reagents of greater surface tension limits.

## Claims

1. A method of preparing a coated member with fire retardant properties comprising the steps of:
- applying a coating comprising a primer or a graft solution to a surface of said member;
- applying expandable fire proof insulation material to said surface of said member while said coating is still wet; and
- curing said coated member.

2. The method of claim 1, wherein said step of applying expandable fire proof insulation material is achieved contemporaneously with said step of applying said coating by adding said expandable fire proof insulation material to said coating and applying said coating.

3. The method according to any of claims 1-2 wherein said expandable fire proof insulation material is expandable graphite.

4. The method of claim 3 wherein said expandable graphite has a particle size from 0.01 mm to 2 mm.

5. The method of claim 3 wherein said expandable graphite has an expansion volume of between 50 ml/gram and 500 ml/gram.

6. The method according to any of the claims 1-5, further comprising the step of adhering a fiber mesh to a surface of said member after said step of applying a coating, and before said step of curing said coated member.

7. The method of claim 6 wherein said step of applying coating to said member is achieved contemporaneously with said step of adhering said fiber mesh to said member by applying said coating to a first side of said fiber mesh and adhering said fiber mesh to said member such that said first side of said fiber mesh abuts a surface of said member.

8. The method according to any of the claims 6-7, further comprising the step of applying said coating to a second side of said fiber mesh.

9. The method of claim 6 wherein said step of applying expandable fire proof insulation material to said member is achieved contemporaneously with said step of adhering said fiber mesh to said member by applying expandable insulation graphite to a first side of said fiber mesh and adhering said fiber mesh to said member such that said first side of said fiber mesh abuts a surface of said member.

10. The method according to any of the claims 6-9, further comprising the step of applying said expandable fire proof insulation material to a second side of said fiber mesh.

11. The method according to any of the claims 6-10 wherein said fiber mesh has a melting point of greater than 120°C.

12. The method according to any of the claims 6-11 wherein said fiber mesh has a thickness between 0.1 mm and 10 mm.

13. The method according to any of the preceding claims where the member comprises a pre-insulated pipe with fire retardant properties, said pre-insulated pipe comprising an inner carrying pipe; an outer casing pipe surrounding said carrier pipe; and an insulating foam between said carrier pipe and said outer casing pipe.

14. A method according to any of the preceding claims, wherein said member comprises a surface of polypropylene and said coating comprises a primer for PP with surface tension higher than 56 dyn/cm².

15. A method according to any of the claims 6-13, wherein said member comprises a surface of acrylonitrile butadiene styrene and said coating comprises a primer for ABS with surface tension higher than 56 dyn/cm².

16. A method according to any of the claims 6-13, wherein said member comprises a surface of poly vinyl chloride and said coating comprises a primer for PVC with surface tension higher than 56 dyn/cm².

17. A method according to any of the claims 6-13, wherein said member comprises a surface of polyethylene and said coating comprises a graft solution.

18. The method of claim 17, wherein
- said graft solution comprises a monomer or prepolymer, a metal ion graft initiator, a peroxide catalyst, and a polymerization promoter reactive with said monomer or prepolymer; and
- wherein said graft solution is prepared by a process comprising the steps of combining a Part A solution and a Part B solution prior to application to the pre-insulated pipe, wherein the Part A solution comprises:
(i) a monomer or prepolymer suitable for grafting to the pre-insulated pipe, in an amount ranging from 0.1 to about 50%, by weight of the graft coating, selected from the group consisting of water-dispersed epoxy monomers, aliphatic moisture-curable urethanes, aromatic urethane prepolymers, silane prepolymers, vinyl and epoxy functional silanes and combinations thereof;
(ii) a metal ion graft initiator in an amount ranging from about 0.01 to about 1.0% by weight, relative to the weight of prepolymer or monomer in the graft coating, selected from the group consisting of ions of silver, iron, silver, cobalt, copper and cerium; and
(iii) a peroxide catalyst in an amount ranging from about 0.1 to about 5%, selected from the group consisting of hydrogen peroxide, an organic peroxide, and combinations thereof;
- wherein the Part B solution comprises a polymerization promoter;

19. The method of claim 18 wherein said Part A solution of said graft solution further comprises a flame retardant in an amount ranging from about 0.1 wt percent to about 10 wt percent of the solution, selected from the group consisting of chlorinated phosphate esters, melamine derivatives, oligomeric phosphate esters, bromoaryl ether/phosphate product, and phosphonates and a compatible solvent or solvents.

20. The method of claim 18, further comprising the step of applying a flame retardant in an amount ranging from about 0.1 wt percent to about 10 wt percent of the solution, selected from the group consisting of chlorinated phosphate esters, melamine derivatives, oligomeric phosphate esters, bromoaryl ether/phosphate product, and phosphonates and a compatible solvent or solvents, prior to said step of curing said graft coated member.

21. The method of claim 19, wherein said polymerization promoter is selected from the group consisting of a polyfunctional aziridine liquid crosslinker and an aromatic polyisocyanate, in a concentration effective to react with, and crosslink, said monomer or prepolymer.

22. The method of claim 19 wherein the monomer or prepolymer comprises an epoxy moiety, and the Part B solution further comprises at least one epoxy hardener or curing agent.

23. A method of preparing a coating layer for application on a member which is already at least partly surface treated with a coating of a graft solution or a primer and for obtaining fire retardant properties; wherein said method comprises the steps of:
- applying expandable fire proof insulation material to a fiber mesh; and
- curing said coating layer.

24. The method according to any of claims 23 wherein said expandable fire proof insulation material is expandable graphite.

25. The method of claim 24 wherein said expandable graphite has a particle size from 0.01 mm to 2 mm.

26. The method of claim 24 wherein said expandable graphite has an expansion volume of between 50 ml/gram and 500 ml/gram.

27. The method according to any of the claims 23-26 wherein said fiber mesh has a melting point of greater than 120°C.

28. The method according to any of the claims 23-27 wherein said fiber mesh has a thickness between 0.1 mm and 10 mm.

29. A coated member with fire retardant properties; wherein said coated member includes a coating applied to an outer surface of said member, and wherein said coating comprises an expandable fire proof insulation material and a graft solution or a primer.

30. A coated member according to claim 29 wherein said expandable fire proof insulation material is expandable graphite.

31. A coated member of claim 30 wherein said expandable graphite has a particle size from 0.01 mm to 2 mm.

32. A coated member of claim 30 wherein said expandable graphite has an expansion volume of between 50 ml/gram and 500 ml/gram.

33. A coated member according to one or more of claims 29-32 wherein said coating further comprises a fiber mesh.

34. A coated member of claim 33 wherein said fiber mesh has a melting point of greater than 120°C.

35. A coated member according to one or more of claims 33-34 wherein said fiber mesh has a thickness between 0.05 mm and 5 mm.

36. A coated member according to one or more of claims 33-35 wherein said coating is applied to both sides of said fiber mesh.

37. A coated member according to one or more of claims 33-36 wherein said expandable fire proof insulation material is applied to both sides of said fiber mesh.

38. A coated member according to any of the claims 29-37 where the member comprises a pre-insulated pipe with fire retardant properties, said pre-insulated pipe comprising an inner carrying pipe; an outer casing pipe surrounding said carrier pipe; and an insulating foam between said carrier pipe and said outer casing pipe.

39. A coated member according to any of the preceding claims, wherein said member comprises a surface of polypropylene and said coating comprises a primer for PP with surface tension higher than 56 dyn/cm².

40. A coated member according to any of the claims 29-38 wherein said member comprises a surface of poly vinyl chloride and said coating comprises a primer for PVC with surface tension higher than 56 dyn/cm².

41. A coated member according to any of the claims 29-38, wherein said member comprises a surface of acrylonitrile butadiene styrene and said coating comprises a primer for ABS with surface tension higher than 56 dyn/cm².

42. A coated member according to any of the claims 29-38, wherein said member comprises a surface of polyethylene and said coating comprises a graft solution.

43. A graft coated member according to claims 42, wherein said graft solution comprises:
- a combination of a Part A solution and a Part B solution, wherein the Part A solution comprises:
(i). a monomer or prepolymer suitable for grafting to the pre-insulated pipe and , in an amount ranging from 0.1 to about 50%, by weight of the graft coating, selected from the group consisting of water-dispersed epoxy monomers, aliphatic moisture-curable urethanes, aromatic urethane prepolymers, silane prepolymers, vinyl and epoxy functional silanes and combinations thereof;
(ii). a metal ion graft initiator in an amount ranging from about 0.01 to about 1.0% by weight, relative to the weight of prepolymer or monomer in the graft coating, selected from the group consisting of ions of silver, iron, silver, cobalt, copper and cerium; and
(iii). a peroxide catalyst in an amount ranging from about 0.1 to about 5%, selected from the group consisting of hydrogen peroxide, an organic peroxide, and combinations thereof;
- wherein the Part B solution comprises a polymerization promoter.

44. A graft coated member according to one or more of claims 42-43 wherein said graft coating further comprises a flame retardant in an amount ranging from about 0.1 wt percent to about 10 wt percent of the solution, selected from the group consisting of chlorinated phosphate esters, melamine derivatives, oligomeric phosphate esters, bromoaryl ether/phosphate product, and phosphonates and a compatible solvent or solvents.

45. A graft coated member according to one or more of claims 43-44, wherein said polymerization promoter is selected from the group consisting of a polyfunctional aziridine liquid crosslinker and an aromatic polyisocyanate, in a concentration effective to react with, and crosslink, said monomer or prepolymer.

46. A graft coated member according to one or more of claims 43-45 wherein said monomer or prepolymer comprises an epoxy moiety, and said Part B solution further comprises at least one epoxy hardener or curing agent.

47. A coating layer for application on a member which is already surface treated with a coating comprising a primer or a graft solution and for obtaining fire retardant properties; wherein said coating layer comprises a fine mesh and an expandable fire proof insulation material.

48. A coating layer according to claim 47 wherein said expandable fire proof insulation material is expandable graphite.

49. A coating layer of claim 48 wherein said expandable graphite has a particle size from 0.01 mm to 2 mm.

50. A coating layer of claim 48 wherein said expandable graphite has an expansion volume of between 50 ml/gram and 500 ml/gram.

51. A coating layer according to any of the claims 47-50 wherein said fiber mesh has a melting point of greater than 120°C.

52. A coating layer according to one or more of the claims 47-51 wherein said fiber mesh has a thickness between 0.05 mm and 5 mm.

53. A coating layer according to one or more of claims 47-52 wherein said expandable fire proof insulation material is applied to both sides of said fiber mesh.

## Patentansprüche

1. Verfahren zur Vorbereitung eines beschichteten Elements mit feuerhemmenden Eigenschaften, umfassend die folgenden Schritte:
- Auftragen einer einen Primer oder eine Pfropflösung umfassenden Beschichtung auf eine Oberfläche des Elements;
- Auftragen eines expandierbaren feuerfesten Isoliermaterials auf die Oberfläche des Elements, während die Beschichtung noch nass ist; und
- Aushärtung des beschichteten Elements.

2. Verfahren nach Anspruch 1, wobei der Schritt des Auftragens eines expandierbaren feuerfesten Isoliermaterials gleichzeitig mit dem Schritt des Auftragens der Beschichtung durch Zugabe des expandierbaren feuerfesten Isoliermaterials zur Beschichtung und Auftragen der Beschichtung erreicht wird.

3. Verfahren nach irgendeinem der Ansprüche 1-2, wobei das expandierbare feuerfeste Isoliermaterial ein expandierbarer Graphit ist.

4. Verfahren nach Anspruch 3, wobei der expandierbare Graphit eine Partikelgröße von 0,01 mm bis 2 mm aufweist.

5. Verfahren nach Anspruch 3, wobei der expandierbare Graphit ein Expansionsvolumen zwischen 50 ml/Gramm und 500 ml/Gramm aufweist.

6. Verfahren nach irgendeinem der Ansprüche 1-5, zusätzlich umfassend den Schritt der Haftung einer Fasermasche an einer Oberfläche des Elements nach dem Schritt des Auftragens einer Beschichtung und vor dem Schritt der Aushärtung des beschichteten Elements.

7. Verfahren nach Anspruch 6, wobei der Schritt des Auftragens von Beschichtung auf das Element gleichzeitig mit dem Schritt der Haftung der Fasermasche am Element durch Auftragen der Beschichtung auf eine erste Seite der Fasermasche und Haftung der Fasermasche am Element erreicht wird, so dass die erste Seite der Fasermasche an einer Oberfläche des Elements anliegt.

8. Verfahren nach irgendeinem der Ansprüche 6-7, welches Verfahren zusätzlich den Schritt des Auftragens der Beschichtung auf eine zweite Seite der Fasermasche umfasst.

9. Verfahren nach Anspruch 6, wobei der Schritt des Auftragens eines expandierbaren feuerfesten Isoliermaterials auf das Element gleichzeitig mit dem Schritt der Haftung der Fasermasche am Element durch Auftragen eines expandierbaren Isoliergraphits auf eine erste Seite der Fasermasche und Haftung der Fasermasche am Element erreicht wird, so dass die erste Seite der Fasermasche an einer Oberfläche des Elements anliegt.

10. Verfahren nach irgendeinem der Ansprüche 6-9, welches Verfahren zusätzlich den Schritt des Auftragens des expandierbaren feuerfesten Isoliermaterials auf eine zweite Seite der Fasermasche umfasst.

11. Verfahren nach irgendeinem der Ansprüche 6-10, wobei die Fasermache einen Schmelzpunkt höher als 120° C aufweist.

12. Verfahren nach irgendeinem der Ansprüche 6-11, wobei die Fasermasche eine Dicke zwischen 0,1 mm und 10 mm aufweist.

13. Verfahren nach irgendeinem der vorhergehenden Ansprüche, wobei das Element ein vorisoliertes Rohr mit feuerhemmenden Eigenschaften umfasst, welches vorisolierte Rohr ein tragendes Innenrohr; ein äußeres das tragende Rohr umgebendes Gehäuserohr; und einen Isolierschaum zwischen dem tragenden Rohr und dem äußeren Gehäuserohr umfasst.

14. Verfahren nach irgendeinem der vorhergehenden Ansprüche, wobei das Element eine Oberfläche von Polypropylen umfasst, und die Beschichtung einen Primer für PP mit einer Oberflächenspannung höher als 56 dyn/cm² umfasst.

15. Verfahren nach irgendeinem der Ansprüche 6-13, wobei das Element eine Oberfläche von Acrylonitril-Butadien-Styren umfasst, und die Beschichtung einen Primer für ABS mit einer Oberflächenspannung höher als 56 dyn/cm² umfasst.

16. Verfahren nach irgendeinem der Ansprüche 6-13, wobei das Element eine Oberfläche von Polyvinylchlorid umfasst, und die Beschichtung einen Primer für PVC mit einer Oberflächenspannung höher als 56 dyn/cm² umfasst.

17. Verfahren nach irgendeinem der Ansprüche 6-13, wobei das Element eine Oberfläche von Polyethylen umfasst, und die Beschichtung eine Pfropflösung umfasst.

18. Verfahren nach Anspruch 17, wobei
- die Pfropflösung ein Monomer oder Prepolymer, einen MetallionenPfropfinitiator, einen Peroxidkatalysator und einen mit dem Monomer oder Prepolymer reaktiven Polymerisationspromoter umfasst; und
- wobei die Pfropflösung durch einen Prozess vorbereitet wird, welcher die Schritte des Kombinierens einer Teil A-Lösung und einer Teil B-Lösung vor Auftragen auf das vorisolierte Rohr umfasst, wobei die Teil A-Lösung:
(i) ein Monomer oder Prepolymer, geeignet für Pfropfung auf das vorisolierte Rohr, in einer Menge, die von 0,1 bis ungefähr 50 Gew.-% der Pfropfbeschichtung reicht, ausgewählt aus der Gruppe, bestehend aus wasserdispergierten Epoxidmonomeren, aliphatischen feuchtigkeitsaushärtbaren Urethanen, aromatischen Urethanprepolymeren, Silanprepolymeren, vinyl- und epoxidfunktionellen Silanen und Kombinationen davon;
(ii) einen Metallionenpfropfinitiator in einer Menge, die von ungefähr 0,01 bis ungefähr 1,0 Gew.-% reicht, relativ zum Gewicht des Prepolymers oder Monomers in der Pfropfbeschichtung, ausgewählt aus der Gruppe, bestehend aus Silberionen, Eisen, Silber, Cobalt, Kupfer und Cerium; und
(iii) einen Peroxid katalysator in einer Menge, die von ungefähr 0,1 bis ungefähr 5 % reicht, ausgewählt aus der Gruppe, bestehend aus Wasserstoffperoxid, einem organischen Peroxid und Kombinationen davon, umfasst;
- wobei die Teil B-Lösung einen Polymerisationspromoter umfasst;

19. Verfahren nach Anspruch 18, wobei die Teil A-Lösung der Pfropflösung zusätzlich ein feuerhemmendes Mittel in einer Menge umfasst, die von ungefähr 0,1 Gew.-% bis ungefähr 10 Gew.-% der Lösung reicht, ausgewählt aus der Gruppe, bestehend aus chlorierten Phosphatestern, Melaminderivaten, oligomeren Phosphatestern, einem Bromoarylether-/Phosphatprodukt und Phosphonaten und einem kompatiblen Lösungsmittel oder Lösungsmitteln.

20. Verfahren nach Anspruch 18, zusätzlich umfassend den Schritt des Auftragens eines feuerhemmenden Mittels in einer Menge, die von ungefähr 0,1 Gew.-% bis ungefähr 10 Gew.-% der Lösung reicht, ausgewählt aus der Gruppe, bestehend aus chlorierten Phosphatestern, Melaminderivaten, oligomeren Phosphatestern, einem Bromoarylether-/Phosphatprodukt und Phosphonaten und einem kompatiblen Lösungsmittel oder Lösungsmitteln, vor dem Schritt der Aushärtung des pfropfbeschichteten Elements.

21. Verfahren nach Anspruch 19, wobei der Polymerisationspromoter aus der Gruppe ausgewählt ist, die aus einem polyfunktionellen flüssigen Aziridinvernetzer und einem aromatischen Polyisocyanat besteht, welche in einer Konzentration wirksam sind, um mit dem Monomer oder Prepolymer zu reagieren und zu vernetzen.

22. Verfahren nach Anspruch 19, wobei das Monomer oder Prepolymer einen Epoxidteil umfasst, und die Teil B-Lösung zusätzlich mindestens einen Epoxidhärter oder ein Aushärtungsmittel umfasst.

23. Verfahren zur Vorbereitung einer Beschichtungsschicht zum Auftragen auf ein mit einer Beschichtung einer Pfropflösung oder eines Primers bereits zumindest teilweise oberflächenbehandeltes Element und zum Erlangen von feuerhemmenden Eigenschaften; wobei das Verfahren die folgenden Schritte umfasst:
- Auftragen eines expandierbaren feuerfesten Isoliermaterials auf eine Fasermasche;
und
- Aushärtung der Beschichtungsschicht.

24. Verfahren nach irgendeinem der Ansprüche 23, wobei das expandierbare feuerfeste Isoliermaterial ein expandierbarer Graphit ist.

25. Verfahren nach Anspruch 24, wobei der expandierbare Graphit eine Partikelgröße von 0,01 mm bis 2 mm aufweist.

26. Verfahren nach Anspruch 24, wobei der expandierbare Graphit ein Expansionsvolumen zwischen 50 ml/Gramm und 500 ml/Gramm aufweist.

27. Verfahren nach irgendeinem der Ansprüche 23-26, wobei die Fasermasche einen Schmelzpunkt von mehr als 120° C aufweist.

28. Verfahren nach irgendeinem der Ansprüche 23-27, wobei die Fasermasche eine Dicke zwischen 0,1 mm und 10 mm aufweist.

29. Beschichtetes Element mit feuerhemmenden Eigenschaften; wobei das beschichtete Element eine auf eine Außenoberfläche des Elements aufgetragene Beschichtung enthält, und wobei die Beschichtung ein expandierbares feuerfestes Isoliermaterial und eine Pfropflösung oder einen Primer umfasst.

30. Beschichtetes Element nach Anspruch 29, wobei das expandierbare feuerfeste Isoliermaterial ein expandierbarer Graphit ist.

31. Beschichtetes Element nach Anspruch 30, wobei der expandierbare Graphit eine Partikelgröße von 0,01 mm bis 2 mm aufweist.

32. Beschichtetes Element nach Anspruch 30, wobei der expandierbare Graphit ein Expansionsvolumen zwischen 50 ml/Gramm und 500 ml/Gramm aufweist.

33. Beschichtetes Element nach einem oder mehreren der Ansprüche 29-32, wobei die Beschichtung zusätzlich eine Fasermasche umfasst.

34. Beschichtetes Element nach Anspruch 33, wobei die Fasermasche einen Schmelzpunkt von mehr als 120° C aufweist.

35. Beschichtetes Element nach einem oder mehreren der Ansprüche 33-34, wobei die Fasermasche eine Dicke zwischen 0,05 mm und 5 mm aufweist.

36. Beschichtetes Element nach einem oder mehreren der Ansprüche 33-35, wobei die Beschichtung auf beide Seiten der Fasermasche aufgetragen wird.

37. Beschichtetes Element nach einem oder mehreren der Ansprüche 33-36, wobei das expandierbare feuerfeste Isoliermaterial auf beide Seiten der Fasermasche aufgetragen wird.

38. Beschichtetes Element nach irgendeinem der Ansprüche 29-37, wobei das Element ein vorisoliertes Rohr mit feuerhemmenden Eigenschaften umfasst, welches vorisolierte Rohr ein tragendes Innenrohr; ein äußeres das tragende Rohr umgebendes Gehäuserohr; und einen Isolierschaum zwischen dem tragenden Rohr und dem äußeren Gehäuserohr umfasst.

39. Beschichtetes Element nach irgendeinem der vorhergehenden Ansprüche, wobei das Element eine Oberfläche von Polypropylen umfasst, und die Beschichtung einen Primer für PP mit einer Oberflächenspannung höher als 56 dyn/cm² umfasst.

40. Beschichtetes Element nach irgendeinem der Ansprüche 29-38, wobei das Element eine Oberfläche von Polyvinylchlorid umfasst, und die Beschichtung einen Primer für PVC mit einer Oberflächenspannung höher als 56 dyn/cm² umfasst.

41. Beschichtetes Element nach irgendeinem der Ansprüche 29-38, wobei das Element eine Oberfläche von Acrylonitril-Butadien-Styren umfasst, und die Beschichtung einen Primer für ABS mit einer Oberflächenspannung höher als 56 dyn/cm² umfasst.

42. Beschichtetes Element nach irgendeinem der Ansprüche 29-38, wobei das Element eine Oberfläche von Polyethylen umfasst, und die Beschichtung eine Pfropflösung umfasst.

43. Pfropfbeschichtetes Element nach Anspruch 42, wobei die Pfropflösung:
- eine Kombination einer Teil A-Lösung und einer Teil B-Lösung umfasst, wobei die Teil A-Lösung:
(i). ein Monomer oder Prepolymer, geeignet für Pfropfung auf das vorisolierte Rohr und, in einer Menge, die von 0,1 bis ungefähr 50 Gew.-% der Pfropfbeschichtung reicht, ausgewählt aus der Gruppe, bestehend aus wasserdispergierten Epoxidmonomeren, aliphatischen feuchtigkeitsaushärtbaren Urethanen, aromatischen Urethanprepolymeren, Silanprepolymeren, vinyl- und epoxidfunktionellen Silanen und Kombinationen davon;
(ii). einen Metallionenpfropfinitiator in einer Menge, die von ungefähr 0,01 bis ungefähr 1,0 Gew.-% reicht, relativ zum Gewicht des Prepolymers oder Monomers in der Pfropfbeschichtung, ausgewählt aus der Gruppe, bestehend aus Silberionen, Eisen, Silber, Cobalt, Kupfer und Cerium; und
(iii). einen Peroxidkatalysator in einer Menge, die von ungefähr 0,1 bis ungefähr 5 % reicht, ausgewählt aus der Gruppe, bestehend aus Wasserstoffperoxid, einem organischen Peroxid und Kombinationen davon, umfasst;
- wobei die Teil B-Lösung einen Polymerisationspromoter umfasst.

44. Pfropfbeschichtetes Element nach einem oder mehreren der Ansprüche 42-43, wobei die Pfropfbeschichtung zusätzlich ein feuerhemmendes Mittel in einer Menge umfasst, die von ungefähr 0,1 Gew.-% bis ungefähr 10 Gew.-% der Lösung reicht, ausgewählt aus der Gruppe, bestehend aus chlorierten Phosphatestern, Melaminderivaten, oligomeren Phosphatestern, einem Bromoarylether-/Phosphatprodukt und Phosphonaten und einem kompatiblen Lösungsmittel oder Lösungsmitteln.

45. Pfropfbeschichtetes Element nach einem oder mehreren der Ansprüche 43-44, wobei der Polymerisationspromoter aus der Gruppe ausgewählt ist, die aus einem polyfunktionellen flüssigen Aziridinvernetzer und einem aromatischen Polyisocyanat besteht, welche in einer Konzentration wirksam sind, um mit dem Monomer oder Prepolymer zu reagieren und zu vernetzen.

46. Pfropfbeschichtetes Element nach einem oder mehreren der Ansprüche 43-45, wobei das Monomer oder Prepolymer einen Epoxidteil umfasst, und die Teil B-Lösung zusätzlich mindestens einen Epoxidhärter oder ein Aushärtungsmittel umfasst.

47. Beschichtungsschicht zum Auftragen auf ein mit einer einen Primer oder eine Pfropflösung umfassenden Beschichtung bereits oberflächenbehandeltes Element und zum Erlangen von feuerhemmenden Eigenschaften; wobei die Beschichtungsschicht eine Feinmasche und ein expandierbares feuerfestes Isoliermaterial umfasst.

48. Beschichtungsschicht nach Anspruch 47, wobei das expandierbare feuerfeste Isoliermaterial ein expandierbarer Graphit ist.

49. Beschichtungsschicht nach Anspruch 48, wobei der expandierbare Graphit eine Partikelgröße von 0,01 mm bis 2 mm aufweist.

50. Beschichtungsschicht nach Anspruch 48, wobei der expandierbare Graphit ein Expansionsvolumen zwischen 50 ml/Gramm und 500 ml/Gramm aufweist.

51. Beschichtungsschicht nach irgendeinem der Ansprüche 47-50, wobei die Fasermasche einen Schmelzpunkt von mehr als 120° C aufweist.

52. Beschichtungsschicht nach einem oder mehreren der Ansprüche 47-51, wobei die Fasermasche eine Dicke zwischen 0,05 mm und 5 mm aufweist.

53. Beschichtungsschicht nach einem oder mehreren der Ansprüche 47-52, wobei das expandierbare feuerfeste Isoliermaterial auf beide Seiten der Fasermasche aufgetragen wird.

## Revendications

1. Méthode pour la production d'un élément revêtu ignifuge, comprenant les étapes suivantes:
- l'application d'un revêtement comprenant une couche de fond ou une solution de greffe à une surface dudit élément;
- l'application d'une matière isolante ignifuge extensible à la surface de l'élément tandis que le revêtement est toujours mouillé; et
- la trempe de l'élément revêtu.

2. Méthode selon la revendication 1, dans laquelle ladite étape de l'application de la matière isolante ignifuge extensible est réalisée en même temps que ladite étape de l'application du revêtement par l'addition de la matière isolante ignifuge extensible au revêtement et l'application du revêtement.

3. Méthode selon l'une quelconque des revendications 1 à 2, dans laquelle la matière isolante ignifuge extensible est le graphite expansible.

4. Méthode selon la revendication 3, dans laquelle le graphite expansible présente des dimensions de particule de 0,01 mm à 2 mm.

5. Méthode selon la revendication 3, dans laquelle le graphite expansible présente un volume d'expansion compris entre 50 ml/gram et 500 ml/gram.

6. Méthode selon l'une quelconque des revendications 1 à 5, en outre comprenant l'étape de l'adhésion d'un filet fibreux à une surface dudit élément après l'étape de l'application d'un revêtement et avant l'étape de la trempe de l'élément revêtu.

7. Méthode selon la revendication 6, dans laquelle l'étape de l'application d'un revêtement à l'élément est réalisée en même temps que l'étape de l'adhésion dudit filet fibreux à l'élément par l'application du revêtement à un premier côté du filet fibreux et l'adhésion du filet fibreux à l'élément si bien que le premier côté du filet fibreux s'appuie sur une surface de l'élément.

8. Méthode selon l'une quelconque des revendications 6 à 7, en outre comprenant l'étape de l'application du revêtement à un deuxième côté du filet fibreux.

9. Méthode selon la revendication 6, dans laquelle l'étape de l'application d'une matière isolante ignifuge extensible à l'élément est réalisée en même temps que ladite étape de l'adhésion d'un filet fibreux à l'élément par l'application du graphite isolant expansible à un premier côté du filet fibreux et l'adhésion du filet fibreux à l'élément si bien que le premier côté du filet fibreux s'appuie sur une surface de l'élément.

10. Méthode selon l'une quelconque des revendications 6 à 9, en outre comprenant l'étape de l'application de la matière isolante ignifuge extensible à un deuxième côté du filet fibreux.

11. Méthode selon l'une quelconque des revendications 6 à 10, dans laquelle le filet fibreux présente un point de fusion supérieur à 120°C.

12. Méthode selon l'une quelconque des revendications 6 à 11, dans laquelle le filet fibreux présente une épaisseur comprise entre 0,1 mm et 10 mm.

13. Méthode selon l'une quelconque des revendications précédentes, dans laquelle l'élément comprend un tuyau préisolé ignifuge, tuyau préisolé qui comprend un tuyau de support intérieur; un tuyau récipient extérieur entourant le tuyau de support; et une mousse isolante située entre le tuyau de support et le tuyau récipient extérieur.

14. Méthode selon l'une quelconque des revendications précédentes, dans laquelle l'élément comprend une surface de polypropylène (PP), et le revêtement comprend une couche de fond pour PP avec une tension de surface supérieure à 56 dyn/cm².

15. Méthode selon l'une quelconque des revendications 6 à 13, dans laquelle l'élément comprend une surface en acrylonitrile-butadiène-styrène (ABS), et le revêtement comprend une couche de fond pour ABS avec une tension de surface supérieure à 56 dyn/cm².

16. Méthode selon l'une quelconque des revendications 6 à 13, dans laquelle l'élément comprend une surface en polychlorure de vinyle (PVC), et le revêtement comprend une couche de fond pour PVC avec une tension de surface supérieure à 56 dyn/cm².

17. Méthode selon l'une quelconque des revendications 6 à 13, dans laquelle l'élément comprend une surface en polyéthylène, et le revêtement comprend une solution de greffe.

18. Méthode selon la revendication 17, dans laquelle
- la solution de greffe comprend un monomère ou un prépolymère, un initiateur de greffage d'ions métalliques, un catalyseur péroxyde et un promoteur réactif de polymérisation avec ledit monomère et prépolymère; et
- dans laquelle la solution de greffe est préparée par un procédé comprenant les étapes de la combinaison d'une solution « Part A » et d'une solution « Part B » avant l'application au tuyau préisolé, dans lequel la solution « Part A » comprend:
(i) un monomère ou un prépolymère approprié pour le greffage au tuyau préisolé, d'une quantité dans l'intervalle de 0,1 à environ 50 pour cent en poids du revêtement de greffage, choisi parmi le groupe constitué des monomères époxydes dispersés dans l'eau, des uréthanes aliphatiques durcissables à l'humidité, des prépolymères urethanes aromatiques, des prépolymères de silane, des silanes fonctionnels de vinyle et d'époxy et ses combinaisons;
(ii) un initiateur de greffage d'ions métalliques d'une quantité dans l'intervalle d'environ 0,01 à environ 1,0 pour cent en poids par rapport au poids de prépolymère ou de monomère dans le revêtement de greffage, choisi parmi le groupe constitué d'ions d'argent, du fer, de l'argent, du cobalt, du cuivre et du cérium; et
(iii) un catalyseur péroxyde d'une quantité dans l'intervalle d'environ 0,1 à environ 5%, choisi parmi le groupe constitué du peroxyde d'hydrogène, d'un peroxyde organique et ses combinaisons;
- dans lequel la solution « Part B » comprend un promoteur de polymérisation.

19. Méthode selon la revendication 18, dans laquelle la solution « Part A » de la solution de greffe en outre comprend un retardant feu d'une quantité dans l'intervalle d'environ 0,1 pour cent en poids à environ 10 pour cent en poids de la solution, choisi parmi le groupe constitué par esters phosphates chlorés, dérivés de mélamine, esters phosphates oligomeriques, produit bromoaryl d'éther/phosphate et phosphonates et un ou plusieurs solvants compatibles.

20. Méthode selon la revendication 18, en outre comprenant l'étape de l'application d'un retardant feu d'une quantité dans l'intervalle d'environ 0,1 pour cent en poids à environ 10 pour cent en poids de la solution, choisi parmi le groupe constitué par esters phosphates chlorés, dérivés de mélamine, esters phosphates oligomeriques, produit bromoaryl d'éther/phosphate et phosphonates et un ou plusieurs solvants compatibles avant l'étape de la trempe de l'élément revêtu de greffe.

21. Méthode selon la revendication 19, dans laquelle le promoteur de polymérisation est choisi parmi le groupe constitué par un agent réticulant liquide d'aziridine polyfonctionnelle et un polyisocyanate aromatique d'une concentration effective pour réagir avec et réticuler ledit monomère ou prépolymère.

22. Méthode selon la revendication 19, dans laquelle le monomère ou prépolymère comprend une portion d'époxy, et la solution « Part B » comprend en outre au moins un durcisseur d'époxy ou un agent de trempe.

23. Méthode pour la préparation d'une couche de revêtement à appliquer sur un élément qui a déjà au moins partiellement subi un traitement superficiel avec un revêtement d'une solution de greffe ou une couche de fond et pour obtenir des propriétés ignifuges; où la méthode comprend les étapes suivantes:
- l'application de la matière isolante ignifuge extensible à un filet fibreux; et
- le durcissement de la couche de revêtement.

24. Méthode selon la revendication 23, dans laquelle la matière isolante ignifuge extensible est le graphite expansible.

25. Méthode selon la revendication 24, dans laquelle le graphite expansible présente des dimensions de particule de 0,01 mm à 2 mm.

26. Méthode selon la revendication 24, dans laquelle le graphite expansible présente un volume d'expansion compris entre 50 ml/gram et 500 ml/gram.

27. Méthode selon l'une quelconque des revendications 23 à 26, dans laquelle le filet fibreux présente un point de fusion supérieur à 120°C.

28. Méthode selon l'une quelconque des revendications 23 à 27, dans laquelle le filet fibreux présente une épaisseur comprise entre 0,1 mm et 10 mm.

29. Elément revêtu et ignifuge; où l'élément revêtu comprend un revêtement appliqué à une surface extérieure dudit élément, et où le revêtement comprend une matière isolante ignifuge extensible et une solution de greffe ou une couche de fond.

30. Elément revêtu selon la revendication 29, dans lequel la matière isolante ignifuge extensible est le graphite expansible.

31. Elément revêtu selon la revendication 30, dans lequel le graphite expansible présente des dimensions de particule de 0,01 mm à 2 mm.

32. Elément revêtu selon la revendication 30, dans lequel le graphite expansible présente un volume d'expansion compris entre 50 ml/gram et 500 ml/gram.

33. Elément revêtu selon l'une ou plusieurs des revendications 29 à 32, dans lequel le revêtement en outre comprend un filet fibreux.

34. Elément revêtu selon la revendication 33, dans lequel le filet fibreux présente un point de fusion supérieur à 120°C.

35. Elément revêtu selon l'une ou plusieurs des revendications 33 à 34, dans lequel le filet fibreux présente une épaisseur comprise entre 0,05 mm et 5 mm.

36. Elément revêtu selon l'une ou plusieurs des revendications 33 à 35, dans lequel le revêtement est appliqué aux deux côtés du filet fibreux.

37. Elément revêtu selon l'une ou plusieurs des revendications 33 à 36, dans lequel la matière isolante ignifuge extensible est appliquée aux deux côtés du filet fibreux.

38. Elément revêtu selon l'une quelconque des revendications 29 à 37, où l'élément comprend un tuyau préisolé ignifuge, tuyau préisolé qui comprend un tuyau de support intérieur; un tuyau récipient extérieur entourant le tuyau de support; et une mousse isolante située entre le tuyau de support et le tuyau récipient extérieur.

39. Elément revêtu selon l'une quelconque des revendications précédentes, où l'élément comprend une surface de polypropylène (PP), et le revêtement comprend une couche de fond pour PP avec une tension de surface supérieure à 56 dyn/cm².

40. Elément revêtu selon l'une quelconque des revendications 29 à 38, où l'élément comprend une surface en polychlorure de vinyle (PVC), et le revêtement comprend une couche de fond pour PVC avec une tension de surface supérieure à 56 dyn/cm².

41. Elément revêtu selon l'une quelconque des revendications 29 à 38, où l'élément comprend une surface en acrylonitrile-butadiène-styrène (ABS), et le revêtement comprend une couche de fond pour ABS avec une tension de surface supérieure à 56 dyn/cm².

42. Elément revêtu selon l'une quelconque des revendications 29 à 38, où l'élément comprend une surface en polyéthylène, et le revêtement comprend une solution de greffe.

43. Elément revêtu de greffe selon la revendication 42, où la solution de greffe comprend:
- une combinaison d'une solution « Part A » et d'une solution « Part B », où la solution « Part A » comprend:
(i) un monomère ou un prépolymère approprié pour le greffage au tuyau préisolé, d'une quantité dans l'intervalle de 0,1 à environ 50 pour cent en poids du revêtement de greffage, choisi parmi le groupe constitué des monomères époxydes dispersés dans l'eau, des uréthanes aliphatiques durcissables à l'humidité, des prépolymères urethanes aromatiques, des prépolymères de silane, des silanes fonctionnels de vinyle et d'époxy et ses combinaisons;
(ii) un initiateur de greffage d'ions métalliques d'une quantité dans l'intervalle d'environ 0,01 à environ 1,0 pour cent en poids par rapport au poids de prépolymère ou de monomère dans le revêtement de greffage, choisi parmi le groupe constitué d'ions d'argent, du fer, de l'argent, du cobalt, du cuivre et du cérium; et
(iii) un catalyseur péroxyde d'une quantité dans l'intervalle d'environ 0,1 à environ 5%, choisi parmi le groupe constitué du peroxyde d'hydrogène, d'un peroxyde organique et ses combinaisons;
- où la solution « Part B » comprend un promoteur de polymérisation.

44. Elément revêtu de greffe selon l'une ou plusieurs des revendications 42 à 43, dans lequel le revêtement de greffe en outre comprend un retardant feu d'une quantité dans l'intervalle d'environ 0,1 pour cent en poids à environ 10 pour cent en poids de la solution, choisi parmi le groupe constitué par esters phosphates chlorés, dérivés de mélamine, esters phosphates oligomeriques, produit bromoaryl d'éther/phosphate et phosphonates et un ou plusieurs solvants compatibles.

45. Elément revêtu de greffe selon l'une ou plusieurs des revendications 43 à 44, dans lequel le promoteur de polymérisation est choisi parmi le groupe constitué par un agent réticulant liquide d'aziridine polyfonctionnelle et un polyisocyanate aromatique d'une concentration effective pour réagir avec et réticuler ledit monomère ou prépolymère.

46. Elément revêtu de greffe selon l'une ou plusieurs des revendications 43 à 45, dans lequel le monomère ou prépolymère comprend une portion d'époxy, et la solution « Part B » comprend en outre au moins un durcisseur d'époxy ou un agent de trempe.

47. Couche de revêtement à appliquer sur un élément qui a déjà subi un traitement superficiel avec un revêtement comprenant une couche de fond ou une solution de greffe et pour obtenir des propriétés ignifuges; où la couche de revêtement comprend un filet fin et une matière isolante ignifuge extensible.

48. Couche de revêtement selon la revendication 47, dans laquelle la matière isolante ignifuge extensible est le graphite expansible.

49. Couche de revêtement selon la revendication 48, dans laquelle le graphite expansible présente des dimensions de particule de 0,01 mm à 2 mm.

50. Couche de revêtement selon la revendication 48, dans laquelle le graphite expansible présente un volume d'expansion compris entre 50 ml/gram et 500 ml/gram.

51. Couche de revêtement selon l'une quelconque des revendications 47 à 50, dans laquelle le filet fibreux présente un point de fusion supérieur à 120°C.

52. Couche de revêtement selon l'une ou plusieurs des revendications 47 à 51, dans laquelle le filet fibreux présente une épaisseur comprise entre 0,05 mm et 5 mm.

53. Couche de revêtement selon l'une ou plusieurs des revendications 47 à 52, dans laquelle la matière isolante ignifuge extensible est appliquée aux deux côtés du filet fibreux.
